# FASCICULE DE BREVET EUROPEEN

(11) **EP 3 648 989 B1**
(45) Date de publication et mention de la délivrance du brevet: **21.04.2021**
(21) Numéro de dépôt: 18733639.1
(22) Date de dépôt: 02.07.2018
(51) Int. Cl.: B60C 1/00, C08F 136/08, C08C 19/22, C08F 236/10, C08L 15/00

(54) **POLYMÈRE PORTANT DES GROUPES PENDANTS FONCTIONNELS PARTICULIERS IMIDAZOLIDINONE**
POLYMERE MIT SPEZIELLEN ANHÄNGENDEN FUNKTIONALEN IMIDAZOLIDINONGRUPPEN
POLYMER CARRYING SPECIFIC PENDANT IMIDAZOLIDINONE FUNCTIONAL GROUPS

(30) Priorité: 04.07.2017 FR 1756301
(43) Date de publication de la demande: 13.05.2020
(73) Titulaire: Compagnie Générale des Etablissements Michelin, 63000 Clermont-Ferrand (FR)
(72) Inventeur: SALIT, Anne-Frédérique, 63040 Clermont-ferrand Cedex 09 (FR); FLEURY, Etienne, 63040 Clermont-ferrand Cedex 09 (FR); GANDER, Sophie, 63040 Clermont-ferrand Cedex 09 (FR); JEAN-BAPTISTE-DIT-DOMINIQUE, François, 63040 Clermont-ferrand Cedex 09 (FR)
(74) Mandataire: Gandon-Pain, Sylvie
(86) Numéro de dépôt international: PCT/EP2018/067769
(87) Numéro de publication internationale: WO 2019/007884

(56) Documents cités:
- WO-A1-2012/007441
- WO-A1-2012/007684

## Description

La présente invention concerne un polymère portant des groupes associatifs azotés comprenant au moins un motif les rendant susceptibles de s'associer entre eux ou avec une charge par des liaisons non covalentes.

La demande concerne également un procédé de préparation de tels polymères modifiés et aussi une composition de caoutchouc comprenant de tels polymères et au moins une charge.

Dans le domaine industriel, des mélanges de polymères avec des charges sont souvent utilisés. Pour que de tels mélanges présentent de bonnes propriétés, on recherche en permanence des moyens pour améliorer la dispersion des charges au sein des polymères. L'un des moyens pour parvenir à ce résultat est l'utilisation d'agents de couplage capables d'établir des interactions entre le polymère et la charge.

Des agents de couplage d'un polymère avec une charge comprenant des dipôles azotés sont décrits dans les documents publiés sous les numéros US7186845B2 et JP2008208163.

Ces documents décrivent la modification de polymères comprenant des motifs diéniques par des composés dipolaires azotés comprenant en outre un hétérocycle, ledit hétérocycle comprenant lui-même un atome d'azote, et un atome d'oxygène et/ou de soufre.

Plus particulièrement, les composés décrits sont des nitrones porteuses de fonction oxazoline, thiazoline comme par exemple la ((2-oxazolyl)-phényl-N-méthylnitrone) :

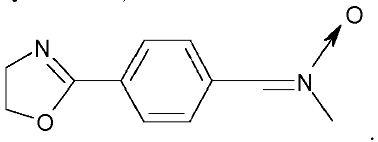

Lorsque des polymères diéniques sont amenés à réagir avec de tels composés, les polymères en résultant porteront les cycles oxazoline ou thiazoline.

Ces cycles présents sur le polymère sont susceptibles de réagir à leur tour, avec des fonctions de surface des charges, comme le noir de carbone ou la silice, avec lesquels les polymères sont mélangés. Cette réaction conduit à l'établissement de liaisons covalentes entre le polymère modifié par l'agent de couplage et la charge du fait de l'ouverture du cycle oxazoline ou thiazoline. En effet, comme cela est décrit dans le document US7186845B2, les cycles oxazoline et/ou thioazoline sont susceptibles de s'ouvrir en présence d'un nucléophile pouvant par exemple être présent à la surface de la charge.

L'établissement de telles liaisons covalentes présente néanmoins des inconvénients lors de la préparation de mélanges comprenant ces polymères modifiés par des agents de couplage avec des charges. En particulier, l'existence de ces liaisons covalentes précocement établies, entre le polymère et les charges, rend ces mélanges très visqueux à l'état non réticulé, ce qui rend difficile toutes les opérations préalables à la réticulation (vulcanisation) des formulations à base de caoutchouc, notamment la préparation des mélanges des composants, et leur mise en forme. Ces inconvénients ont un fort impact sur la productivité industrielle.

Il est donc souhaitable de proposer de nouveaux polymères ne présentant pas les inconvénients ci-dessus, c'est-à-dire des polymères qui soient capables, après mélange avec une charge, de ne pas former de liaisons covalentes avec la charge et donc de ne pas provoquer une trop forte augmentation de la viscosité du mélange.

Ainsi, la demande de brevet WO 2012/007441 porte sur un polymère greffé par un composé comprenant au moins un groupement Q, et au moins un groupement A reliés entre eux par au moins et de préférence un groupe espaceur Sp dans lequel :
- Q comprend un dipôle contenant au moins et de préférence un atome d'azote ;
- A comprend un groupe associatif comprenant au moins un atome d'azote ;
- Sp est un atome ou un groupe d'atomes formant une liaison entre Q et A.

Lorsqu'un polymère greffé par un composé tel que défini ci-dessus est mélangé à des charges, celui-ci n'établit que des liaisons labiles avec les charges, ce qui permet d'assurer une bonne interaction polymère - charge, bénéfique pour les propriétés finales du polymère, mais sans les inconvénients qu'une trop forte interaction polymère - charge pourrait provoquer.

Un exemple d'un tel composé est l'oxyde de 2-[2-(2-oxoimidazolidin-1-yl)éthoxy]benzonitrile :

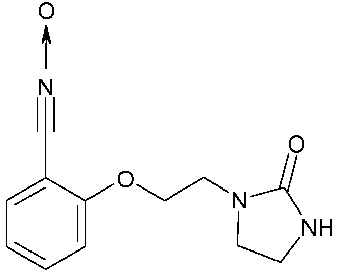

Par ailleurs, dans la demande WO 2016/207263, divers composés sont exemplifiés, dont notamment l'oxyde de 2,4,6-triméthyl-3-[2-(2-oxoimidazolidin-1-yl)éthoxy]benzonitrile :

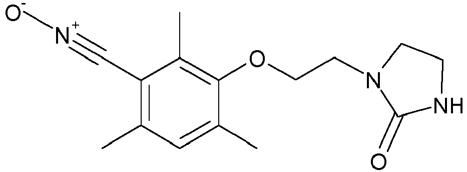

Il s'avère que les compositions de caoutchouc, utilisables notamment pour la fabrication de pneumatiques, comprenant ce polymère greffé présentent des propriétés intéressantes en termes de rigidité, de contrainte à la rupture ou encore d'hystérèse. Néanmoins, il existe toujours un besoin constant de disposer de compositions de caoutchouc présentant des propriétés améliorées.

Dans ce contexte, la demanderesse a découvert que la présence de groupes pendants fonctionnels particuliers dans des polymères, une fois intégrés dans des compositions de caoutchouc, utilisables notamment pour la fabrication de pneumatiques, conduisait à l'obtention d'excellentes propriétés de rigidité, de contrainte à la rupture et d'hystérèse.

L'invention a donc pour objet un polymère comprenant une ou plusieurs unités diéniques et portant le long de la chaîne polymère principale un ou plusieurs groupes pendants de formule (I) suivante : 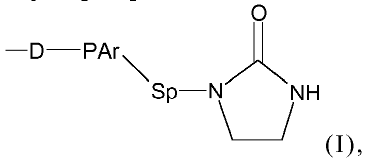 dans laquelle :
- PAr désigne un groupe polyaromatique comprenant au moins deux cycles hydrocarbures aromatiques condensés, chacun desdits cycles aromatiques condensés étant éventuellement substitué par une ou plusieurs chaînes carbonées, identiques ou différentes, indépendantes les unes des autres, aliphatiques ou aromatiques, linéaires, ramifiées ou cycliques, éventuellement substituées ou interrompues par un ou plusieurs hétéroatomes ;
- Sp représente un atome ou un groupe d'atomes ;
- D désigne un groupe de rattachement à la chaîne polymère principale.

Un autre objet de l'invention est un procédé de préparation du polymère selon l'invention.

L'invention a également pour objet une composition de caoutchouc comprenant le polymère selon l'invention.

De manière connue, un polymère comprend généralement au moins une chaîne polymère principale. Cette chaîne polymère peut être qualifiée de principale à partir du moment où toutes les autres chaînes du polymère sont considérées comme des chaînes pendantes, comme le document « Glossary of basic terms in polymer science », (IUPAC recommendations 1996), PAC, 1996, 68, 2287, p.2294, le mentionne.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

L'invention ainsi que ses avantages seront aisément compris à la lumière de la description et des exemples de réalisations qui suivent.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse.

On entend au sens de la présente invention par « chaîne carbonée » une chaîne comprenant un ou plusieurs atomes de carbone.

On entend au sens de la présente invention par « polymère comprenant une ou plusieurs unités diéniques » tout polymère, naturel ou synthétique, constitué au moins en partie (i.e. un homopolymère ou un copolymère) d'unités monomères diènes (monomères porteurs de deux double liaisons carbone-carbone, conjuguées ou non). Un tel polymère peut être également appelé polymère diénique.

On entend plus particulièrement par polymère diénique susceptible d'être utilisé dans l'invention :
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone ;
(c) tout copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène; de tels polymères sont décrits en particulier dans les documents WO 2004/035639A1 et US 2005/0239639A1 ;
(d) tout copolymère d'isobutène et d'isoprène (caoutchouc butyle), ainsi que les versions halogénées, en particulier chlorées ou bromées, de ce type de copolymère ;
(e) tout copolymère obtenu par copolymérisation d'un ou plusieurs diènes conjugués avec l'éthylène, une α-monooléfine aliphatique acyclique ayant de 3 à 18 atomes de carbone, une α-monooléfine aromatique ou leur mélange comme par exemple ceux décrits dans les documents WO 2005028526, WO 2004035639 et WO 2007054224.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène. A titre d'a-monooléfines aliphatiques acycliques ayant de 3 à 18 atomes de carbone, on peut citer le propène, le butène, l'hexène, l'octène, l'hexadécène. A titre d'a-monooléfine aromatique, typiquement de formule CH₂=CH-Ar dans laquelle le symbole Ar représente un groupe aromatique tel qu'un phényle, substitué ou non conviennent le styrène, les styrènes substitués par un ou plusieurs groupes alkyles en para, méta ou ortho ou leurs mélanges.

Conformément à la formule (I), le groupe pendant comprend un groupe D désignant un groupe de rattachement à la chaîne polymère principale. Autrement dit, le groupe D permet de lier de façon covalente le groupe PAr à la chaîne polymère principale.

Conformément à la formule (I), le groupe pendant comprend un groupe PAr désignant un groupe polyaromatique comprenant au moins deux cycles hydrocarbures aromatiques condensés.

On entend au sens de la présente invention par « cycle hydrocarbure aromatique » un cycle aromatique dont le squelette est constitué d'atomes de carbone. Autrement dit, il n'y a pas d'hétéroatome dans le squelette du cycle.

On entend au sens de la présente invention par « au moins deux cycles hydrocarbures aromatiques condensés » deux ou plusieurs cycles hydrocarbures aromatiques ayant en commun au moins deux atomes de carbone successifs.

Lesdits au moins deux cycles hydrocarbures aromatiques condensés peuvent être ortho-condensés ou ortho- et péri-condensés.

Avantageusement, le groupe polyaromatique comprenant au moins deux cycles hydrocarbures aromatiques condensés est choisi parmi un groupe formé de deux cycles aromatiques condensés selon un arrangement rectiligne et un groupe formé de trois cycles aromatiques condensés selon un arrangement rectiligne, de préférence un groupe formé de deux cycles aromatiques condensés selon un arrangement rectiligne. Ces structures s'apparentent aux composés du naphtalène et de l'anthracène.

Conformément à la formule (I), le groupe polyaromatique comprenant au moins deux cycles hydrocarbures aromatiques condensés est au moins substitué par le groupe D et le groupe Sp. Autrement dit, le premier cycle desdits au moins deux cycles hydrocarbures aromatiques est au moins substitué par le groupe D, ledit premier cycle ou le deuxième cycle desdits au moins deux cycles hydrocarbures aromatiques étant au moins substitué par le groupe Sp, ledit groupe Sp permettant de relier la fonction imidazolidinone à l'un au moins desdits au moins deux cycles hydrocarbures aromatiques.

Avantageusement, chacun des cycles hydrocarbures aromatiques condensés est éventuellement substitué par une ou plusieurs chaînes carbonées, identiques ou différentes, aliphatiques ou aromatiques, linéaires, ramifiées ou cycliques, éventuellement substituées ou interrompues par un ou plusieurs hétéroatomes, et inertes vis-à-vis de la fonction imidazolidinone.

On entend au sens de la présente invention par « chaîne carbonée inerte vis-à-vis de la fonction imidazolidinone » une chaîne carbonée qui ne réagit pas avec la fonction imidazolidinone.

De manière préférée, lesdites chaînes carbonées sont saturées.

De préférence, chacun des cycles hydrocarbures aromatiques condensés est éventuellement substitué par une ou plusieurs chaînes carbonées, identiques ou différentes, saturées, plus préférentiellement un ou plusieurs groupes alkyles, identiques ou différents, préférentiellement un ou plusieurs groupes alkyles, identiques ou différents, en C₁-C₁₂, plus préférentiellement en C₁-C₆, encore plus préférentiellement en C₁-C₄, ou un groupe choisi parmi -OR', -NHR', - SR', R' étant un groupe alkyle, préférentiellement un groupe alkyle en C₁-C₁₂, plus préférentiellement en C₁-C₆, encore plus préférentiellement en C₁-C₄.

Encore plus préférentiellement, chacun des cycles hydrocarbures aromatiques condensés est éventuellement substitué par un ou plusieurs groupes, identiques ou différents, méthyle, éthyle ou un ou plusieurs groupes OCH₃.

Avantageusement, les groupes pendants de formule (I) sont répartis le long de la chaîne polymère principale de façon aléatoire.

En particulier, lesdits groupes pendants sont notamment ailleurs qu'aux extrémités de la chaîne polymère principale.

Selon un mode de réalisation préféré, le taux de fonction du polymère selon l'invention varie de 0,01 à 5% molaire, de préférence de 0,01 à 1% molaire, de préférence encore de 0,1 à 1% molaire.

Ainsi, le taux molaire des groupes pendants de formule (I) varie avantageusement de 0,01 à 5%, de préférence de 0,01 à 1%, plus préférentiellement de 0,1 à 1%.

Par taux de fonction, exprimé en pourcentage molaire, on entend le nombre de groupes pendants de formule (I) pour 100 motifs du polymère (moles de motifs monomères constituant le polymère, y compris ceux qui portent les groupes pendants).

De préférence, les polymères de la présente invention sont des élastomères diéniques.

Ces élastomères diéniques peuvent être classés de manière connue en deux catégories, ceux dits essentiellement insaturés et ceux dits essentiellement saturés. Ces deux catégories d'élastomères diéniques sont envisageables dans le cadre de l'invention.

Un élastomère diénique essentiellement saturé a un taux de motifs ou unités d'origine diénique faible ou très faible (diènes conjugués) qui est toujours inférieur à 15% (% en moles).

De préférence, l'élastomère diénique essentiellement saturé est choisi parmi les copolymères d'éthylène-propylène-monomère diène (de type EPDM) et les caoutchoucs butyle.

A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

De préférence, on utilise au moins un élastomère diénique du type (a) ou (b) ou (e) ci-dessus.

Les polymères peuvent avoir toute microstructure qui est fonction des conditions de polymérisation utilisées, notamment de la présence ou non d'un agent modifiant et/ou randomisant et des quantités d'agent modifiant randomisant employées. Les polymères peuvent être par exemple à blocs, statistiques, séquencés, microséquencés, et être préparés en dispersion, en émulsion ou en solution ; ils peuvent être couplés et/ou étoilés ou encore fonctionnalisés avec un agent de couplage et/ou d'étoilage ou de fonctionnalisation.

Conviennent en particulier les élastomères diéniques choisis dans le groupe constitué par les polybutadiènes (BR), les polyisoprènes de synthèse (IR), le caoutchouc naturel (NR), les copolymères de butadiène, les copolymères d'isoprène et les mélanges de ces élastomères, de préférence dans le groupe constitué par les polybutadiènes (BR), les polyisoprènes de synthèse (IR), les copolymères de butadiène, les copolymères d'isoprène et les mélanges de ces élastomères.

De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Selon l'invention, le polymère porte le long de la chaîne polymère principale un ou plusieurs groupes pendants de formule (I) telle que définie ci-dessus.

Le groupe Sp est de préférence une chaîne hydrocarbonée en C₁-C₂₄, linéaire, ramifiée, ou cyclique, pouvant contenir un ou plusieurs radicaux aromatiques, et/ou un ou plusieurs hétéroatomes. Ladite chaîne peut éventuellement être substituée, pour autant que les substituants ne réagissent pas avec la fonction imidazolidinone.

On entend au sens de la présente invention par « chaîne hydrocarbonée » une chaîne comprenant un ou plusieurs atomes de carbone et un ou plusieurs atomes d'hydrogène.

On entend au sens de la présente invention par « chaîne hydrocarbonée pouvant contenir un ou plusieurs hétéroatomes » le fait que la chaîne peut être substituée ou interrompue par un ou plusieurs hétéroatomes. Lorsque la chaîne est interrompue par un hétéroatome, celui-ci peut être en bout de chaîne ou en milieu de chaîne.

Avantageusement, le groupe Sp est une chaîne alkylène linéaire ou ramifiée en C₁-C₂₄, préférentiellement en C₁-C₁₀, plus préférentiellement en C₁-C₆, éventuellement interrompue par un ou plusieurs atomes d'azote, de soufre ou d'oxygène.

De préférence, le groupe Sp contient un motif choisi parmi-(CH₂)_{yl}-, -[NH-(CH₂)_{y2}]ₓ₁- et -[O-(CH₂)_{y3}]ₓ₂-, y₁, y₂ et y₃ représentant, indépendamment les uns des autres, un nombre entier allant de 1 à 6, et x₁ et x₂ représentant, indépendamment l'un de l'autre, un nombre entier allant de 1 à 4.

De préférence, le ou les groupes pendants de formule (I) sont de formule (II) suivante : 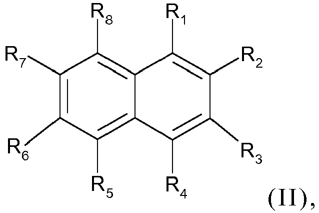 dans laquelle :
- un premier groupement choisi parmi R₁ à R₈ désigne un groupe de formule (III) suivante : 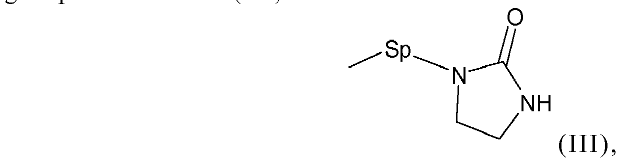 dans laquelle Sp est tel que défini précédemment ;
- un second groupement choisi parmi R₁ à R₈, différent du premier groupement, désigne le groupe D tel que défini précédemment,

les six autres groupements, identiques ou différents, représentant, indépendamment les uns des autres, un atome d'hydrogène ou une chaîne carbonée, aliphatique ou aromatique, linéaire, ramifiée ou cyclique, éventuellement substituée ou interrompue par un ou plusieurs hétéroatomes.

Avantageusement, ladite chaîne carbonée est inerte vis-à-vis de la fonction imidazolidinone.

On entend au sens de la présente invention par « chaîne carbonée inerte vis-à-vis de la fonction imidazolidinone» une chaîne carbonée qui ne réagit pas avec la fonction imidazolidinone.

De manière préférée, ladite chaîne carbonée est saturée.

Ladite chaîne carbonée peut être un groupe alkyle en C₁-C₁₂, plus préférentiellement en C₁-C₆, encore plus préférentiellement en C₁-C₄, ou un groupe choisi parmi -OR', -NHR', -SR', R' étant un groupe alkyle, préférentiellement un groupe alkyle en C₁-C₁₂, plus préférentiellement en C₁-C₆, encore plus préférentiellement en C₁-C₄.

De manière particulièrement préférée, ladite chaîne carbonée est un groupe méthyle, un groupe éthyle ou un groupe OCH₃.

De manière préférée, R₂ ou R₈ désigne le groupe de formule (III).

Avantageusement, R₁ désigne le groupe D.

Selon un mode de réalisation particulier, R₁ désigne le groupe D, R₂ désigne le groupe de formule (III) et R₃ à R₈ représentent un atome d'hydrogène.

Selon un autre mode de réalisation particulier, R₁ désigne le groupe D, R₈ désigne le groupe de formule (III) et R₂ à R₇ représentent un atome d'hydrogène.

De préférence, le groupe Sp désigne le groupe -O-CH₂-CH₂-.

Selon un mode de réalisation particulier, le groupe pendant de formule (II) est choisi parmi un groupe de formule (IV) suivante : 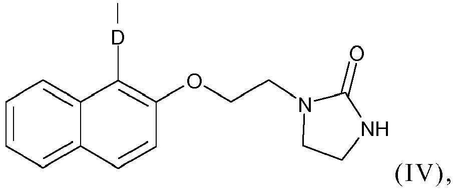 et un groupe de formule (V) suivante : 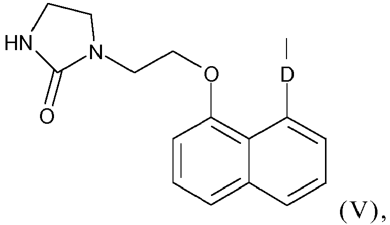 de préférence le groupe de formule (IV).

De préférence, le groupe D désigne un groupe de rattachement à la chaîne polymère principale du polymère selon l'invention, ledit groupe de rattachement résultant de la réaction d'une fonction oxyde de nitrile, nitrone ou nitrile imine, de préférence une fonction oxyde de nitrile, avec une unité diénique.

Ainsi, lorsque le polymère selon l'invention porte le groupe pendant tel que défini précédemment avec un tel groupe D, cela signifie que le polymère est obtenu par greffage d'un composé comprenant la fonction oxyde de nitrile, nitrone ou nitrile imine, le groupe D résultant de la réaction d'une telle fonction avec une unité diénique.

L'invention a également pour objet un procédé de préparation d'un polymère selon l'invention par modification d'un polymère diénique initial, ledit procédé comprenant une étape de greffage sur ledit polymère diénique initial par un composé dont est issu le groupe pendant de formule (I) tel que défini précédemment.

Le greffage du polymère se fait par réaction du polymère diénique initial avec le ou les groupes réactifs de la fonction dont est issu le groupe D. Lors de cette réaction, ce ou ces groupes réactifs forment des liaisons covalentes avec la chaîne du polymère. Le rendement de greffage est particulièrement élevé, préférentiellement supérieur ou égal à 60% molaire et encore plus préférentiellement supérieur ou égal à 80% molaire.

Le greffage du composé dont est issu le groupe pendant de formule (I) est effectué par cycloaddition [3+2] du ou des groupes réactifs de la fonction dont est issu le groupe D et une ou plusieurs doubles liaisons d'une chaîne d'un polymère diénique initial. Un exemple de mécanisme de la cycloaddition [3+2] peut être trouvé dans le document WO 2012/007441. Typiquement, ledit composé est un composé 1,3-dipolaire, le dipôle constituant le groupe réactif de la fonction dont est issu le groupe D. La structure du composé 1,3-dipolaire répond, de préférence, à la formule (I), (IV) ou (V) dans laquelle le symbole « -D » est remplacé par un symbole E désignant un dipôle oxyde de nitrile (CNO).

Le greffage du composé dont est issu le groupe pendant de formule (I) peut être réalisé en masse, par exemple dans un mélangeur interne ou un mélangeur externe tel qu'un mélangeur à cylindres, ou en solution. Le procédé de greffage peut être effectué en solution en continu ou en discontinu. Le polymère ainsi modifié peut être séparé de sa solution par tout type de moyen connu par l'homme de l'art et en particulier par une opération de stripping à la vapeur d'eau.

Avantageusement, le polymère diénique initial est un élastomère diénique.

L'invention a aussi pour objet une composition de caoutchouc à base d'au moins un polymère selon l'invention, d'au moins une charge renforçante et d'au moins un agent de réticulation chimique.

Dans la suite du texte, on entend par "composition à base de" une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par ailleurs, le ou les élastomères diéniques conformes à l'invention peuvent être utilisés en association avec tout type d'élastomère synthétique autre que diénique, voire avec des polymères autres que des élastomères.

Comme expliqué précédemment, la composition de caoutchouc selon l'invention comprend au moins une charge renforçante.

La charge renforçante peut être de tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Un autre composant de la composition de caoutchouc selon l'invention est l'agent de réticulation chimique.

L'agent de réticulation permet la formation de liaisons covalentes entre les chaînes élastomères, ce qui leur confère des propriétés élastiques. L'agent de réticulation peut être à base soit de soufre, soit de donneurs de soufre et/ou de peroxyde et/ou de bismaléimides, de préférence à base de soufre.

Avantageusement, l'agent de réticulation chimique comprend de 0,5 à 12 pce de soufre, de préférence de 1 à 10 pce de soufre, ou de 0,01 à 10 pce d'un ou plusieurs composés peroxyde.

La composition de caoutchouc selon l'invention peut comporter également tout ou partie des additifs usuels habituellement utilisés dans les compositions d'élastomères destinées à la fabrication de pneumatiques, en particulier de bandes de roulement, comme par exemple des plastifiants, des pigments, des agents de protection comme des antioxydants, des charges non renforçantes.

Les composés mentionnés ci-dessus et entrant dans la préparation de compositions de caoutchouc peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme semi-fini de pneumatique pour véhicule.

L'invention a également pour objet un pneumatique comprenant une composition de caoutchouc selon l'invention. Un autre objet de l'invention est un pneumatique poids-lourd comportant une bande de roulement constituée d'une composition de caoutchouc selon l'invention.

La présente invention est en outre illustrée par les exemples non limitatifs suivants.

### EXEMPLES

### Molécules

L'analyse structurale ainsi que la détermination des puretés molaires des molécules de synthèses sont réalisées par une analyse RMN. Les spectres sont acquis sur un spectromètre Avance 3 400 MHz BRUKER équipé d'une sonde "large bande" BBFO-zgrad 5 mm. L'expérience RMN ¹H quantitative, utilise une séquence simple impulsion 30° et un délai de répétition de 3 secondes entre chacune des 64 acquisitions. Les échantillons sont solubilisés dans un solvant deutéré, le diméthylsulfoxide deutéré (DMSO) sauf indication contraire. Le solvant deutéré est également utilisé pour le signal de lock. Par exemple, la calibration est réalisée sur le signal des protons du DMSO deutéré à 2.44 ppm par rapport à une référence TMS à 0ppm. Le spectre RMN ¹H couplé aux expériences 2D HSQC ¹H/¹³C et HMBC ¹H/¹³C permettent la détermination structurale des molécules (cf tableaux d'attributions). Les quantifications molaires sont réalisées à partir du spectre RMN 1D ¹H quantitatif.

L'analyse par spectrométrie de masse est réalisée en injection directe par un mode d'ionisation en électrospray (ID/ESI). Les analyses ont été réalisées sur un spectromètre HCT Bruker (débit 600 µL/min, pression du gaz nébuliseur 10 psi, débit du gaz nébuliseur 4 L/min).

### Molécule greffée sur SBR ou IR

La détermination du taux molaire de l'oxyde de 2-[2-(2-oxoimidazolidin-1-yl)éthoxy]-1-naphtonitrile greffé sur SBR ou IR est réalisée par une analyse RMN. Les spectres sont acquis sur un spectromètre 500 MHz BRUKER équipé d'une «CryoSonde BBFO-zgrad-5 mm». L'expérience RMN ¹H quantitative, utilise une séquence simple impulsion 30° et un délai de répétition de 5 secondes entre chaque acquisition. Les échantillons sont solubilisés dans le chloroforme deutéré (CDCl₃) dans le but d'obtenir un signal de «lock». Des expériences RMN 2D ont permis de vérifier la nature du motif greffé grâce aux déplacements chimiques des atomes de carbone et de proton.

### Essais de traction

Ces essais de traction permettent de déterminer les contraintes d'élasticité et les propriétés à la rupture. Sauf indication différente, ils sont effectués conformément à la norme française NF T 46-002 de septembre 1988.

Les contraintes à la rupture (en MPa) et les allongements à la rupture (en base 100) sont mesurés à 23°C ± 2°C et à 100°C ± 2°C, selon la norme NF T 46-002.

### Propriétés dynamiques

Les propriétés dynamiques ΔG* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente (100°C). On effectue un balayage en amplitude de déformation de 0,1% à 100% (cycle aller), puis de 100% à 0,1% (cycle retour). Les résultats exploités sont le module complexe de cisaillement dynamique (G*) et le facteur de perte tan(δ). Pour le cycle retour, on indique la valeur maximale de tan(δ) observée, noté tan(δ)max.

### I. Synthèse de l'oxyde de 2-[2-(2-oxoimidazolidin-1-yl)éthoxy]-1-naphtonitrile

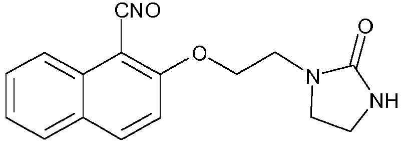

L'oxyde de 2-[2-(2-oxoimidazolidin-1-yl)éthoxy]-1-naphtonitrile est synthétisé en six étapes, nommées étape a1, étape a2, étape b1, étape b2, étape c et étape d.

L'étape a1 est réalisée selon le protocole 1, l'étape a2 selon le protocole 2, l'étape b1 selon le protocole 3. Les étapes b2 et c sont réalisées selon le protocole 4. L'étape d est réalisée selon le protocole 5.

### Etape a1 : préparation du 2-hydroxy-1-naphthaldéhyde

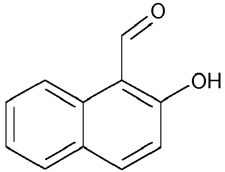

### Protocole 1 :

Ce composé peut être obtenu à partir du napthol par une réaction de formylation selon le protocole dit de Reimer-Tiemann décrit dans Organic Syntheses, 22, 63-4; 1942 par Russell, Alfred et Lockhart, Luther B. ou dans Organic Reactions (Hoboken, NJ, United States), 28, 1982 par Wynberg, Hans et Meijer, Egbert W., ou selon la procédure décrite par Casiraghi, Giovanni et al. dans Journal of the Chemical Society, Perkin Transactions 1: Organic and Bio-Organic Chemistry (1972-1999), (9), 1862-5, 1980 ou encore par une réaction de Vilsmeier décrite par Jones, Gurnos et Stanforth, Stephen P. dans Organic Reactions (Hoboken, NJ, United States), 49, 1997.

Le 2-hydroxy-1-napthaldéhyde est commercial. Il peut par exemple être obtenu chez Aldrich (CAS 708-06-5).

### Etape a2 : préparation de la 1-(2-chloroéthyl)imidazolidin-2-one

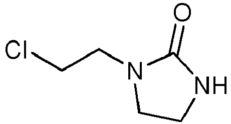

### Protocole 2 :

Ce composé peut être obtenu selon un protocole décrit dans la demande de brevet WO 2012/007684.

### Etape b1 : préparation du 2-(2-(2-oxoimidazolidin-1-yl)éthoxy)-1-naphthaldéhyde

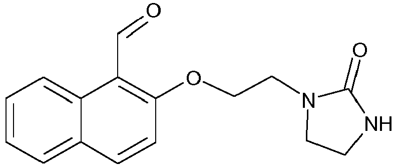

### Protocole 3 :

Un mélange de 2-hydroxy-1-naphthaldéhyde (20,0 g, 0,116 mol), de carbonate de potassium (24,08 g, 0,174 mol), et de 1-(2-chloroéthyl)imidazolidin-2-one (25,9 g, 0,174 mol) dans le DMF (20 mL) est chauffé à 75°C (T_{bain}) pendant 3,0-3,5 heures. Ensuite, une seconde portion de 1-(2-chloroéthyl)imidazolidin-2-one (17,26 g, 0,116 mol) est ajoutée et le milieu réactionnel est agité pendant 9 à 10 heures à 75°C (T_{bain}). Après un retour à 40-45°C, le milieu réactionnel est versé dans une solution d'hydroxyde de sodium (10g, 0,25 mol) dans l'eau (700 mL). Le mélange est agité pendant 10 à 15 minutes. Le précipité est filtré et lavé sur le filtre par l'eau (3 fois 400 mL).

Un solide gris (31,51g, rendement massique de 95 %) est obtenu.

La pureté molaire est supérieure à 85 % (RMN ¹H).

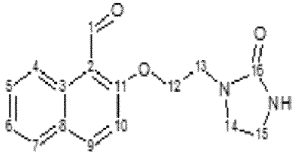

| **N°** | **δ ¹H (ppm)** | **δ ¹³C (ppm)** |
|---|---|---|
| 1 | 10.86 | 191.6 |
| 2 | / | 116.7 |
| 3 | / | 131.5 |
| 4 | 9.19 | 124.9 |
| 5 | 7.56 | 130 |
| 6 | 7.37 | 124.9 |
| 7 | 7.71 | 128.3 |
| 8 | / | 128.6 |
| 9 | 7.99 | 137.7 |
| 10 | 7.2 | 113.1 |
| 11 | / | 162.9 |
| 12 | 4.31 | 68.7 |
| 13 | 3.63 | 13.4 |
| 14 | 3.59 | 16.8 |
| 15 | 3.72 | 38.3 |
| 16 | / | 162.6 |

| | | |
|---|---|---|
| Solvant: CDCl3 | | |

### Etapes b2 et c : préparation de l'oxime de 2-(2-(2-oxoimidazolidin-1-yl)éthoxy)-1-naphthaldéhyde

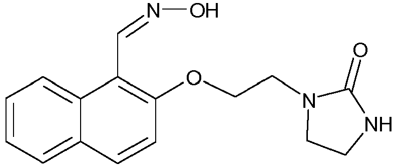

Le produit isolé à l'issue du protocole 3 est utilisé dans le protocole 4 suivant.

### Protocole 4 :

A une solution de 2-(2-(2-oxoimidazolidin-1-yl)éthoxy)-1-naphthaldéhyde (6,3 g, 22,2 mmol) dans l'éthanol (30 mL) à 45°C (T_{bain}), est ajoutée une solution d'hydroxylamine (2,05 g, 31,0 mmol, 50 % dans l'eau, Aldrich) dans l'éthanol (5 mL). Le milieu réactionnel est agité pendant 4 heures à 55 °C (T_{bain}). Après un retour à 40°C, de l'acétate d'éthyle (30 mL) est ajouté goutte à goutte pendant 15 minutes. Le précipité est filtré, lavé sur le filtre par un mélange éthanol/acétate d'éthyle.

Un solide blanc (4,00g, rendement massique de 60 %) est obtenu.

La pureté molaire estimée par RMN ¹H est supérieure à 95 %. CCM : Rf = 0,10 (SiO₂ ; EtOAc) ; révélation par UV et I₂.

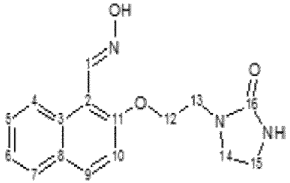

| **N°** | **δ ¹H (ppm)** | **δ ¹³C (ppm)** |
|---|---|---|
| 1 | 8.75 | 147.5 |
| 2 | / | 115.9 |
| 3 | / | 133 |
| 4 | 8.78 | 127 |
| 5 | 7.46 | 128.5 |
| 6 | 7.35 | 125.2 |
| 7 | 7.88 | 132.8 |
| 8 | / | 130.9 |
| 9 | 7.79 | 129.4 |
| 10 | 7.36 | 115.2 |
| 11 | / | 157.1 |
| 12 | 4.28 | 69.3 |
| 13 | 3.59 | 44.4 |
| 14 | 3.64 | 47.6 |
| 15 | 3.40 | 39.3 |
| 16 | / | 165.3 |

| | | |
|---|---|---|
| Solvant: MeOH | | |

### Etape d : préparation de l'oxyde de 2-[2-(2-oxoituidazolidin-1-yl)éthoxy]-1-naphtonitrile

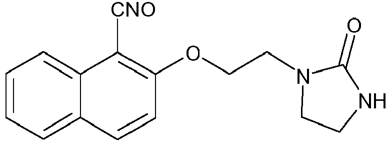

### Protocole 5 :

A une solution d'oxime de 2-(2-(2-oxoimidazolidin-1-yl)éthoxy)-1-naphthaldéhyde (7,5 g, 25,06 mmol) dans le dichlorométhane (300 mL) refroidi à 4°C (T_{bain} = 0°C), est ajoutée, goutte à goutte, une solution aqueuse de NaOCl (78 % g Cl/L, 35 mL) pendant 15 minutes. Le milieu réactionnel est agité pendant 60 à 70 minutes à une température de 4-5°C. La phase organique est séparée. La phase aqueuse est extraite par le dichlorométhane (25 mL). Les solutions organiques réunies sont lavées par l'eau (2 fois par 25 mL). Le solvant est évaporé sous pression réduite jusqu'à 40-50 mL. De l'éther de pétrole 40/60 (60 mL) est ajouté pour la cristallisation. Le précipité obtenu est filtré et lavé par l'éther de pétrole 40/60 (2 fois par 30 mL).

Un solide blanc (6,46 g, rendement massique de 87 %) est obtenu.

La pureté molaire estimée par RMN ¹H est supérieure à 99 %.

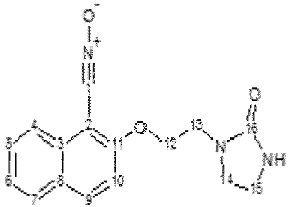

| **N°** | **δ ¹H (ppm)** | **δ ¹³C (ppm)** |
|---|---|---|
| 1 | / | - |
| 2 | / | 96.7 |
| 3 | / | 134.1 |
| 4 | 7.92 | 124 |
| 5 | 7.56 | 128.9 |
| 6 | 7.39 | 125.2 |
| 7 | 7.77 | 128.6 |
| 8 | / | 128.5 |
| 9 | 7.89 | 133 |
| 10 | 7.18 | 112.7 |
| 11 | / | 160.5 |
| 12 | 4.31 | 69.4 |
| 13 | 3.64 | 43.4 |
| 14 | 3.76 | 47.3 |
| 15 | 3.42 | 38.5 |
| 16 | / | 162.5 |

| | | |
|---|---|---|
| Solvant: CDCl3 | | |

### II. Fabrication d'un SBR greffé par l'oxyde de 2-[2-(2-oxoimidazolidin-1-yl)éthoxy]-1-naphtonitrile

L'oxyde de 2-[2-(2-oxoimidazolidin-1-yl)éthoxy]-1-naphtonitrile obtenu précédemment (à l'issue du protocole 5) est utilisé.

On incorpore de l'oxyde de 2-[2-(2-oxoimidazolidin-1-yl)éthoxy]-1-naphtonitrile (0,88g ; 2,97 mmol) à 20g de SBR (contenant 26,5% en poids de styrène et 25% en poids d'unité butadiène-1,2, de Mn=150000 g/mol et Ip=1,84) sur outil à cylindres (mélangeur externe à 23°C). Le mélange est homogénéisé en 15 passes portefeuille. Cette phase de mélangeage est suivie d'un traitement thermique à 120°C pendant 10 minutes sous presse à 10 bars de pression.

L'analyse par RMN ¹H a permis de démontrer un taux molaire de greffage de 0,81% avec un rendement molaire de greffage de 80%.

| N° | δ ¹H (ppm) | δ ¹³C (ppm) |
|---|---|---|
| 1 | / | - |
| 2 | / | - |
| 3 | / | - |
| 4 | 7,70 | 129,5 |
| 5 | 7,61 | 126,7 |
| 6 | 7,77 | 123,7 |
| 7 | 7,29 | 125,9 |
| 8 | / | - |
| 9 | 7,21 | 123,0 |
| 10 | 7,10 | 112,3 |
| 11 | / | - |
| 12 | 4,11 | 66,5 |
| 13 | 3,33 | 44,6 |
| 14 | 3,34 + 3,49 (H non eq*) | 42,0 |
| 15 | 3,18 | 37,2 |
| 16 | / | - |

| | | |
|---|---|---|
| (*) ¹H non équivalents : protons portés par le même atome de carbone n'ayant pas le même déplacement chimique ¹H. | | |

### III. Fabrication d'un IR greffé par l'oxyde de 2-[2-(2-oxoimidazolidin-1-yl)éthoxy]-1-naphtonitrile

L'oxyde de 2-[2-(2-oxoimidazolidin-1-yl)éthoxy]-1-naphtonitrile obtenu précédemment (à l'issue du protocole 5) est utilisé.

On incorpore de l'oxyde de 2-[2-(2-oxoimidazolidin-1-yl)éthoxy]-1-naphtonitrile (0,26g ; 0,88mmol) à 20g d'IR (contenant 98% en poids d'unité isoprène-1,4 cis et de Mn=375000 g/mol et Ip=3,6) sur outil à cylindres (mélangeur externe à 23°C). Le mélange est homogénéisé en 15 passes portefeuille. Cette phase de mélangeage est suivie d'un traitement thermique à 120°C pendant 10 minutes sous presse à 10 bars de pression.

L'analyse par RMN ¹H a permis de démontrer un taux molaire de greffage de 0,26% avec un rendement molaire de greffage de 90%.

| N° | δ ¹H (ppm) | δ ¹³C (ppm) |
|---|---|---|
| 1 | / | - |
| 2 | / | - |
| 3 | / | - |
| 4 | 7,83 | 131,2 |
| 5 | 7,72 | 128,1 |
| 6 | 7,86 | 124,3 |
| 7 | 7,42 | 127,5 |
| 8 | / | - |
| 9 | 7,30 | 124,2 |
| 10 | 7,20 | 113,3 |
| 11 | / | - |
| 12 | 4,23 | 68,3 |
| 13 | 3,53 | 46,5 |
| 14 | 3,56 | 43,6 |
| 15 | 3,33 | 38,4 |
| 16 | / | - |

### IV. Compositions de caoutchouc

### 1) Préparation des compositions de caoutchouc

Quatre compositions de caoutchouc sont préparées.

Des compositions de caoutchouc comprenant le SBR ou l'IR greffé par l'oxyde de 2-[2-(2-oxoimidazolidin-1-yl)éthoxy]-1-naphtonitrile (appelé dans la suite composé A) sont préparées. Des compositions de caoutchouc comprenant le SBR ou l'IR greffé par l'oxyde de 2,4,6-triméthyl-3-[2-(2-oxoimidazolidin-1-yl)éthoxy]benzonitrile (appelé dans la suite composé B) sont également préparées.

On procède pour les essais qui suivent de la manière suivante selon deux cas :
- Cas A : on introduit dans un mélangeur interne Polylab de 85cm³, rempli à 70% et dont la température initiale de cuve est d'environ 110°C, le ou les élastomères diéniques greffés, comme cela est décrit au point II ou au point III.
- Cas B : on introduit dans un mélangeur interne Polylab de 85cm³, rempli à 70% et dont la température initiale de cuve est d'environ 110°C, le ou les élastomères diéniques non greffés. Pour les mélanges concernant le composé A et le composé B, le composé A ou le composé B est introduit en même temps que l'élastomère diénique et est conduit un travail thermomécanique d'une minute à 120°C.

Ensuite, pour chacune des quatre compositions, on introduit la ou les charges renforçantes éventuelles, l'agent de couplage éventuel puis, après une à deux minutes de malaxage, les divers autres ingrédients à l'exception du système de vulcanisation. On conduit alors un travail thermomécanique (phase non-productive) en une étape (durée totale du malaxage égale à environ 5 minutes), jusqu'à atteindre une température maximale de "tombée" de 160°C. On récupère le mélange ainsi obtenu, on le refroidit puis on ajoute le système de vulcanisation (soufre) sur un mélangeur externe (homo-finisseur) à 25°C, en mélangeant le tout (phase productive) pendant environ 5 à 6 minutes.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### a) Compositions de caoutchouc SBR

Les compositions de caoutchouc concernant le SBR sont données dans le tableau 1. La composition de caoutchouc comprenant le SBR greffé par le composé A est appelée composition 1 (composition selon l'invention). La composition de caoutchouc comprenant le SBR greffé par le composé B est appelée composition 2 (composition comparative). Les teneurs sont exprimées en pce. Le taux molaire de composé greffé sur le SBR est de 0,3% aussi bien pour le SBR-g-A que le SBR-g-B.

**Tableau 1**

| Compositions | 1 (invention) | 2 (comparative) |
|---|---|---|
| SBR-g-A (1) | 101,4 | - |
| SBR-g-B (2) | - | 101,3 |
| Silice (3) | 55 | 55 |
| Silane TESPT (4) | 5,5 | 5,5 |
| N234 (5) | 3 | 3 |
| 6PPD (6) | 1,5 | 1,5 |
| TMQ (7) | 1 | 1 |
| Paraffine 6266 (8) | 1 | 1 |
| ZnO (9) | 2,7 | 2,7 |
| Acide stéarique (10) | 2,5 | 2,5 |
| CBS (11) | 1,8 | 1,8 |
| Soufre (12) | 1,5 | 1,5 |

| | | |
|---|---|---|
| (1) SBR greffé par le composé A (2) SBR greffé par le composé B (3) Silice « Zeosil 1165MP » - société Rhodia sous forme de microperles (BET et CTAB d'environ 150-160 m²/g) (4) TESPT (« S169 » - société Degussa) (5) Noir de carbone N234 (6) Antioxydant « Santoflex 6PPD » - société Solutia (7) 2,2,4-triméthyl-1,2-dihydroquinoline - société Flexys (8) Paraffine (9) Oxyde de zinc (grade industriel - Société Umicore) (10) Stéarine (« Pristerene 4031 » - Société Uniquema) (11) CBS : N-cyclohexyl-2-benzothiazyl-sulfénamide (« Santocure CBS » - Société Flexys) | | |

### b) Compositions de caoutchouc IR

Les compositions de caoutchouc concernant l'IR sont données dans le tableau 2. La composition de caoutchouc comprenant l'IR greffé par le composé A est appelée composition 3 (composition selon l'invention). La composition de caoutchouc comprenant l'IR greffé par le composé B est appelée composition 4 (composition comparative). Les teneurs sont exprimées en pce. Le taux molaire de composé greffé sur le IR est de 0,6% aussi bien pour le IR-g-A que le IR-g-B.

**Tableau 2**

| Compositions | 3 (invention) | 4 (comparative) |
|---|---|---|
| IR-g-A (1) | 102,6 | - |
| IR-g-B (2) | - | 103,5 |
| Silice (3) | 55 | 55 |
| Silane TESPT (4) | 5,5 | 5,5 |
| N234 (5) | 3 | 3 |
| 6PPD (6) | 1,5 | 1,5 |
| TMQ (7) | 1 | 1 |
| Paraffine 6266 (8) | 1 | 1 |
| ZnO (9) | 2,7 | 2,7 |
| Acide stéarique (10) | 2,5 | 2,5 |
| CBS (11) | 1,8 | 1,8 |
| Soufre | 1,5 | 1,5 |

| | | |
|---|---|---|
| (1) IR greffé par le composé A (2) IR greffé par le composé B (3) Silice « Zeosil 1165MP » - société Rhodia sous forme de microperles (BET et CTAB d'environ 150-160 m²/g) (4) TESPT (« S169 » - société Degussa) (5) Noir de carbone N234 (6) Antioxydant « Santoflex 6PPD » - société Solutia (7) 2,2,4-triméthyl-1,2-dihydroquinoline (8) Paraffine (9) Oxyde de zinc (grade industriel - Société Umicore) (10) Stéarine (« Pristerene 4031 » - Société Uniquema) (11) CBS : N-cyclohexyl-2-benzothiazyl-sulfénamide (« Santocure CBS » - Société Flexys) | | |

### 2) Essais de caractérisation - Résultats

### a) Compositions de caoutchouc SBR

Les propriétés des compositions 1 et 2 sont comparées. Les résultats sont reportés dans le tableau 3 :

**Tableau 3**

| Compositions | 1 (inv) | 2 (comp) |
|---|---|---|
| **Propriétés en élongation à 23°C (base 100)** | | |
| Contrainte rupture | 100 | 100 |

| **Propriétés en élongation** à **100°C (base 100)** | | |
|---|---|---|
| Contrainte rupture | 106 | 100 |

| **Propriétés dynamiques à 23°C** | | |
|---|---|---|
| G* 10% (MPa) | 3,41 | 3,32 |
| Tan δ max | 0,17 | 0,17 |

| **Propriétés dynamiques à 100°C** | | |
|---|---|---|
| G* 10% (MPa) | 2,18 | 2,05 |
| Tan δ max | 0,11 | 0,12 |

La composition 1 présente à 100°C une meilleure contrainte à la rupture que la composition 2. Par ailleurs, la composition 1 présente une meilleure rigidité que la composition 2, accompagnée d'une conservation des propriétés d'hystérèse.

La composition de caoutchouc selon l'invention possède donc des propriétés améliorées par rapport à la composition de caoutchouc comparative.

### b) Compositions de caoutchouc IR

Les propriétés des compositions 3 et 4 sont comparées. Les résultats sont reportés dans le tableau 4 :

**Tableau 4**

| Compositions | 3 (inv) | 4 (comp) |
|---|---|---|
| **Propriétés en élongation à 23°C (base 100)** | | |
| Contrainte rupture | 111 | 100 |

| **Propriétés en élongation à 100°C (base 100)** | | |
|---|---|---|
| Contrainte rupture | 102 | 100 |

| **Propriétés dynamiques à 23°C** | | |
|---|---|---|
| G* 10% (MPa) | 1,56 | 1,55 |
| Tan δ max | 0,11 | 0,10 |

| **Propriétés dynamiques à 100°C** | | |
|---|---|---|
| G* 10% (MPa) | 1,12 | 1,11 |
| Tan δ max | 0,07 | 0,06 |

La composition 3 présente une meilleure contrainte à la rupture que la composition 4, accompagnée d'une conservation des propriétés de rigidité et d'hystérèse, quelle que soit la température.

La composition de caoutchouc selon l'invention possède donc des propriétés améliorées par rapport à la composition de caoutchouc comparative.

## Revendications

1. Polymère comprenant une ou plusieurs unités diéniques et portant le long de la chaîne polymère principale un ou plusieurs groupes pendants de formule (I) suivante : 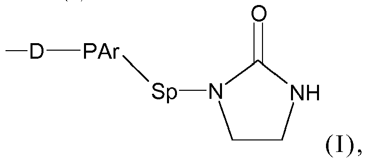 dans laquelle :
- PAr désigne un groupe polyaromatique comprenant au moins deux cycles hydrocarbures aromatiques condensés, chacun desdits cycles aromatiques condensés étant éventuellement substitué par une ou plusieurs chaînes carbonées, identiques ou différentes, indépendantes les unes des autres, aliphatiques ou aromatiques, linéaires, ramifiées ou cycliques, éventuellement substituées ou interrompues par un ou plusieurs hétéroatomes ;
- Sp représente un atome ou un groupe d'atomes ;
- D désigne un groupe de rattachement à la chaîne polymère principale.

2. Polymère selon la revendication 1, **caractérisé en ce que** les groupes pendants sont répartis le long de la chaîne polymère principale de façon aléatoire.

3. Polymère selon la revendication 1 ou 2, **caractérisé en ce que** le taux molaire des groupes pendants de formule (I) varie de 0,01 à 5%, de préférence de 0,01 à 1%, plus préférentiellement de 0,1 à 1%.

4. Polymère selon l'une quelconque des revendications précédentes, **caractérisé en ce que** le polymère est un élastomère diénique.

5. Polymère selon la revendication 4, **caractérisé en ce que** l'élastomère diénique est essentiellement saturé, de préférence choisi parmi les copolymères d'éthylène-propylène-monomère diène et les caoutchoucs butyle.

6. Polymère selon la revendication 4, **caractérisé en ce que** l'élastomère diénique est essentiellement insaturé, de préférence choisi parmi le caoutchouc naturel, les polyisoprènes de synthèse, les polybutadiènes, les copolymères de butadiène, les copolymères d'isoprène et les mélanges de ces élastomères.

7. Polymère selon la revendication 4 ou 6, **caractérisé en ce que** l'élastomère diénique est choisi parmi les polyisoprènes de synthèse, les polybutadiènes, les copolymères de butadiène, les copolymères d'isoprène et les mélanges de ces élastomères.

8. Polymère selon l'une quelconque des revendications précédentes, **caractérisé en ce que** le groupe Sp est une chaîne alkylène linéaire ou ramifiée en C₁-C₂₄, préférentiellement en C₁-C₁₀, plus préférentiellement en C₁-C₆, éventuellement interrompue par un ou plusieurs atomes d'azote, de soufre ou d'oxygène.

9. Polymère selon l'une quelconque des revendications précédentes, **caractérisé en ce que** le ou les groupes pendants de formule (I) sont de formule (II) suivante : 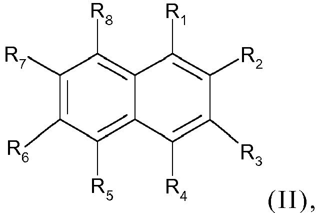 dans laquelle :
- un premier groupement choisi parmi R₁ à R₈ désigne un groupe de formule (III) suivante : 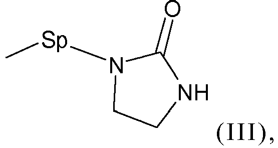 dans laquelle Sp est tel que défini à la revendication 1 ou 8 ;
- un second groupement choisi parmi R₁ à R₈, différent du premier groupement, désigne le groupe D tel que défini à la revendication 1,
les six autres groupements, identiques ou différents, représentant, indépendamment les uns des autres, un atome d'hydrogène ou une chaîne carbonée, aliphatique ou aromatique, linéaire, ramifiée ou cyclique, éventuellement substituée ou interrompue par un ou plusieurs hétéroatomes.

10. Polymère selon la revendication 9, **caractérisé en ce que** le groupe pendant de formule (II) est choisi parmi un groupe de formule (IV) suivante : 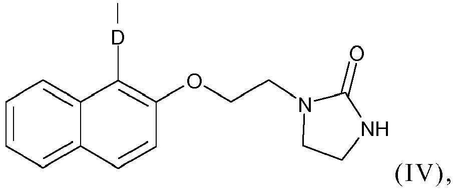 et un groupe de formule (V) suivante : 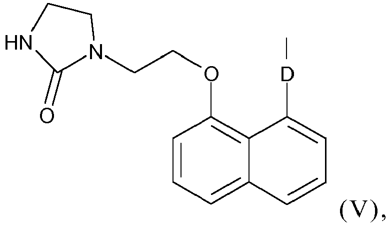 de préférence le groupe de formule (IV).

11. Polymère selon l'une quelconque des revendications précédentes, **caractérisé en ce que** le groupe D résulte de la réaction d'une fonction oxyde de nitrile, nitrone ou nitrile imine, de préférence une fonction oxyde de nitrile, avec une unité diénique.

12. Procédé de préparation d'un polymère par modification d'un polymère diénique initial, ledit procédé comprenant une étape de greffage sur ledit polymère diénique initial par un composé dont est issu le groupe pendant de formule (I) tel que défini à l'une quelconque des revendications 1 à 11.

13. Procédé selon la revendication 12, **caractérisé en ce que** le polymère diénique initial est un élastomère diénique.

14. Composition de caoutchouc à base d'au moins un polymère tel que défini à l'une quelconque des revendications 1 à 11, d'au moins une charge renforçante et d'au moins un agent de réticulation chimique.

15. Composition selon la revendication 14, **caractérisée en ce que** l'agent de réticulation chimique comprend de 0,5 à 12 pce de soufre, de préférence de 1 à 10 pce de soufre, ou de 0,01 à 10 pce d'un ou plusieurs composés peroxyde.

16. Pneumatique comprenant une composition de caoutchouc telle que définie à l'une quelconque des revendications 14 à 15.

17. Pneumatique poids-lourd comportant une bande de roulement constituée d'une composition de caoutchouc telle que définie à l'une quelconque des revendications 14 à 15.

## Patentansprüche

1. Polymer, das eine oder mehrere Dien-Einheiten umfasst und entlang der Polymerhauptkette eine oder mehrere Seitengruppen der folgenden Formel (I) trägt: 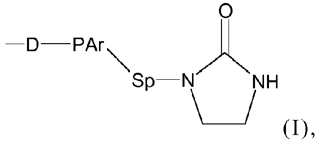 in der:
- PAr für eine polyaromatische Gruppe mit mindestens zwei kondensierten aromatischen Kohlenwasserstoffringen steht, wobei jeder dieser kondensierten aromatischen Ringe gegebenenfalls durch eine oder mehrere gleiche oder verschiedene, voneinander unabhängige, aliphatische oder aromatische, linear verzweigte oder cyclische Kohlenstoffketten, die gegebenenfalls durch ein oder mehrere Heteroatome substituiert oder unterbrochen sind, substituiert ist;
- Sp für ein Atom oder eine Gruppe von Atomen steht;
- D für eine Gruppe zur Verknüpfung mit der Polymerhauptkette steht.

2. Polymer nach Anspruch 1, **dadurch gekennzeichnet, dass** die Seitengruppen entlang der Polymerhauptkette statistisch verteilt sind.

3. Polymer nach Anspruch 1 oder 2, **dadurch gekennzeichnet, dass** der molare Gehalt an Seitengruppen der Formel (I) im Bereich von 0,01 bis 5 %, vorzugsweise von 0,01 bis 1 %, weiter bevorzugt von 0,1 bis 1 %, liegt.

4. Polymer nach einem der vorhergehenden Ansprüche, **dadurch gekennzeichnet, dass** es sich bei dem Polymer um ein Dienelastomer handelt.

5. Polymer nach Anspruch 4, **dadurch gekennzeichnet, dass** das Dienelastomer im Wesentlichen gesättigt ist und vorzugsweise aus Ethylen-Propylen-Dien-Monomer-Copolymeren und Butylkautschuken ausgewählt ist.

6. Polymer nach Anspruch 4, **dadurch gekennzeichnet, dass** das Dienelastomer im Wesentlichen ungesättigt ist und vorzugsweise aus Naturkautschuk, synthetischen Polyisoprenen, Polybutadienen, Butadien-Copolymeren, Isopren-Copolymeren und Mischungen dieser Elastomere ausgewählt ist.

7. Polymer nach Anspruch 4 oder 6, **dadurch gekennzeichnet, dass** das Dienelastomer aus synthetischen Polyisoprenen, Polybutadienen, Butadien-Copolymeren, Isopren-Copolymeren und Mischungen dieser Elastomere ausgewählt ist.

8. Polymer nach einem der vorhergehenden Ansprüche, **dadurch gekennzeichnet, dass** die Gruppe Sp für eine lineare oder verzweigte C₁-C₂₄- vorzugsweise C₁-C₁₀- und weiter bevorzugt C₁-C₆-Alkylenkette, die gegebenenfalls durch ein oder mehrere Stickstoff-, Schwefel- oder Sauerstoffatome unterbrochen ist, steht.

9. Polymer nach einem der vorhergehenden Ansprüche, **dadurch gekennzeichnet, dass** die Seitengruppe bzw. die Seitengruppen der Formel (I) die folgende Formel (II) aufweist bzw. aufweisen: 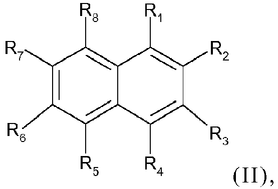 in der:
- eine erste Gruppe, die aus R₁ bis R₈ ausgewählt ist, für eine Gruppe der folgenden Formel (III) steht: 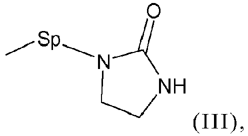 in der Sp wie in Anspruch 1 oder 8 definiert ist;
- eine zweite Gruppe, die aus R₁ bis R₈ ausgewählt ist und von der ersten Gruppe verschieden ist, für die Gruppe D gemäß Anspruch 1 steht,
wobei die sechs anderen Gruppen, die gleich oder verschieden sind, unabhängig voneinander für ein Wasserstoffatom oder eine aliphatische oder aromatische, lineare, verzweigte oder cyclische Kohlenstoffkette, die gegebenenfalls durch ein oder mehrere Heteroatome substituiert oder unterbrochen ist, stehen.

10. Polymer nach Anspruch 9, **dadurch gekennzeichnet, dass** die Seitengruppe der Formel (II) aus einer Gruppe der folgenden Formel (IV): 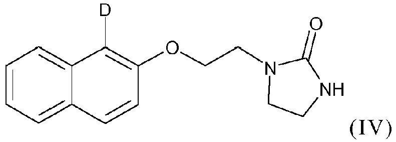 und einer Gruppe der folgenden Formel (V): 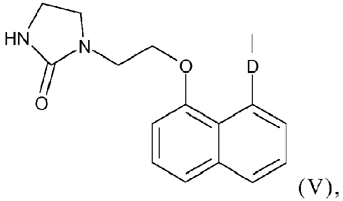 vorzugsweise der Gruppe der Formel (IV), ausgewählt ist.

11. Polymer nach einem der vorhergehenden Ansprüche, **dadurch gekennzeichnet, dass** sich die Gruppe D aus der Reaktion einer Nitriloxid-, Nitron- oder Nitrilimin-Funktion, vorzugsweise einer Nitriloxid-Funktion, mit einer Dieneinheit ergibt.

12. Verfahren zur Herstellung eines Polymers durch Modifizierung eines Ausgangsdienpolymers, wobei das Verfahren einen Schritt des Pfropfens des Ausgangsdienpolymers mit einer Verbindung, von der sich die Seitengruppe der Formel (I) gemäß Ansprüchen 1 bis 11 ableitet, umfasst.

13. Verfahren nach Anspruch 12, **dadurch gekennzeichnet, dass** es sich bei dem Ausgangsdienpolymer um ein Dienelastomer handelt.

14. Kautschukzusammensetzung auf Basis von mindestens einem Polymer gemäß einem der Ansprüche 1 bis 11, mindestens einem verstärkenden Füllstoff und mindestens einem chemischen Vernetzungsmittel.

15. Zusammensetzung nach Anspruch 14, **dadurch gekennzeichnet, dass** das chemische Vernetzungsmittel 0,5 bis 12 phe Schwefel, vorzugsweise 1 bis 10 phe Schwefel, oder 0,01 bis 10 phe einer oder mehrerer Peroxidverbindungen umfasst.

16. Reifen, umfassend eine Kautschukzusammensetzung gemäß einem der Ansprüche 14 bis 15.

17. Lastkraftwagenreifen, umfassend eine Lauffläche, die aus einer Kautschukzusammensetzung gemäß einem der Ansprüche 14 bis 15 besteht.

## Claims

1. Polymer comprising one or more diene units and bearing along the main polymer chain one or more pendent groups of formula (I) below: 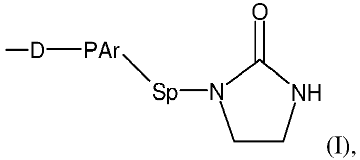 in which:
- PAr denotes a polyaromatic group comprising at least two fused aromatic hydrocarbon rings, each of said fused aromatic rings being optionally substituted by one or more carbon-based chains, which are identical or different, independent of one another, aliphatic or aromatic, linear, branched or cyclic, and optionally substituted or interrupted by one or more heteroatoms;
- Sp represents an atom or a group of atoms;
- D denotes a group of attachment to the main polymer chain.

2. Polymer according to Claim 1, **characterized in that** the pendent groups are randomly distributed along the main polymer chain.

3. Polymer according to Claim 1 or 2, **characterized in that** the molar content of the pendent groups of formula (I) ranges from 0.01 to 5%, preferably from 0.01 to 1%, more preferentially from 0.1 to 1%.

4. Polymer according to any one of the preceding claims, **characterized in that** the polymer is a diene elastomer.

5. Polymer according to Claim 4, **characterized in that** the diene elastomer is essentially saturated, preferably selected from ethylene-propylene-diene monomer copolymers and butyl rubbers.

6. Polymer according to Claim 4, **characterized in that** the diene elastomer is essentially unsaturated, preferably selected from natural rubber, synthetic polyisoprenes, polybutadienes, butadiene copolymers, isoprene copolymers and the mixtures of these elastomers.

7. Polymer according to Claim 4 or 6, **characterized in that** the diene elastomer is selected from synthetic polyisoprenes, polybutadienes, butadiene copolymers, isoprene copolymers and the mixtures of these elastomers.

8. Polymer according to any one of the preceding claims, **characterized in that** the Sp group is a linear or branched C₁-C₂₄, preferentially C₁-C₁₀, more preferentially C₁-C₆, alkylene chain optionally interrupted by one or more nitrogen, sulfur or oxygen atoms.

9. Polymer according to any one of the preceding claims, **characterized in that** the pendent group(s) of formula (I) are of formula (II) below: 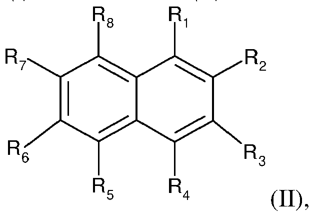 in which:
- a first group selected from R₁ to R₈ denotes a group of formula (III) below: 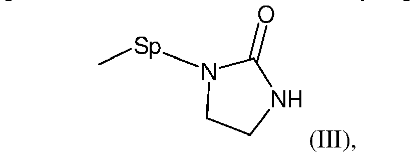 in which Sp is as defined in Claim 1 or 8;
- a second group selected from R₁ to R₈, which is different from the first group, denotes the D group as defined in Claim 1,
the other six groups, which are identical or different, representing, independently of one another, a hydrogen atom or an aliphatic or aromatic, linear, branched or cyclic carbon-based chain which is optionally substituted or interrupted by one or more heteroatoms.

10. Polymer according to Claim 9, **characterized in that** the pendent group of formula (II) is selected from a group of formula (IV) below: 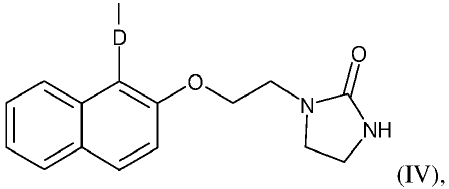 and a group of formula (V) below: 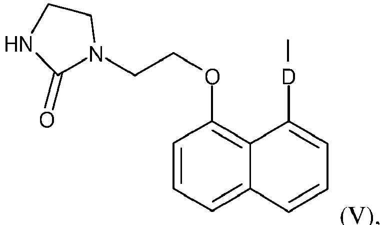 preferably the group of formula (IV).

11. Polymer according to any one of the preceding claims, **characterized in that** the D group results from the reaction of a nitrile, nitrone or nitrile imine function, preferably a nitrile oxide function, with a diene unit.

12. Process for preparing a polymer by modification of an initial diene polymer, said process comprising a step of grafting, on said initial diene polymer, with a compound from which is derived the pendent group of formula (I) as defined in any one of Claims 1 to 11.

13. Process according to Claim 12, **characterized in that** the initial diene polymer is a diene elastomer.

14. Rubber composition based on at least one polymer as defined in any one of Claims 1 to 11, at least one reinforcing filler and at least one chemical crosslinking agent.

15. Composition according to Claim 14, **characterized in that** the chemical crosslinking agent comprises 0.5 to 12 phr of sulfur, preferably 1 to 10 phr of sulfur, or 0.01 to 10 phr of one or more peroxide compounds.

16. Tyre comprising a rubber composition as defined in either one of Claims 14 and 15.

17. Heavy goods vehicle tyre comprising a tread consisting of a rubber composition as defined in either one of Claims 14 and 15.
